# EUROPÄISCHE PATENTSCHRIFT

(11) **EP 3 248 460 B1**
(45) Veröffentlichungstag und Bekanntmachung des Hinweises auf die Patenterteilung: **17.10.2018**
(21) Anmeldenummer: 16170990.2
(22) Anmeldetag: 24.05.2016
(51) Int. Cl.: A01K 15/04

(54) **VORRICHTUNG ZUR BEWEGUNGSEINSCHRÄNKUNG BEI HUNDEN**
DEVICE FOR LIMITING THE MOVEMENT OF DOGS
DISPOSITIF DE LIMITATION DU DEPLACEMENT POUR CHIENS

(43) Veröffentlichungstag der Anmeldung: 29.11.2017
(73) Patentinhaber: Thalmann, Cédric, 3034 Murzelen (CH)
(72) Erfinder: Thalmann, Cédric, 3034 Murzelen (CH)
(74) Vertreter: BOVARD AG

(56) Entgegenhaltungen:
- DE-B3-102010 047 219
- US-B1- 8 726 844
- US-B2- 8 408 163

## Beschreibung

Die vorliegende Erfindung betrifft eine Vorrichtung zur Bewegungseinschränkung bei Hunden oder anderen vierbeinigen Haus- oder Nutztieren, insbesondere zur Einschränkung oder Behinderung einer schnellen Laufbewegung.

Hunde sind als Haustiere und treue Begleiter des Menschen beliebt. Beispielsweise sind in der Schweiz mehr als eine halbe Million Hunde registriert. Damit ein problemloses Miteinander zwischen Mensch und Hund aber auch zwischen den Hunden untereinander und anderen Tieren möglich ist, sollen die Hunde zur Folgsamkeit erzogen werden. Vor allem sollen freilaufende Hunde möglichst unverzüglich auf einen Rückruf ihres Tierhalters reagieren und zu ihm oder ihr zurückkehren.

Insbesondere von Hunden mit einem ausgeprägten Jagdtrieb wird ein Rückrufkommando jedoch oftmals ignoriert. Statt umzukehren wildert der Hund einem Wildtier nach und hetzt es im schlimmsten Fall zu Tode. Gerade im Frühjahr bringen viele Wildtiere ihre Jungen zur Welt. Einem jagenden Hund sind die Jungtiere ausgeliefert. Auch trächtige Tiere sind kaum in der Lage, schnell genug die Flucht zu ergreifen. Um das Wildern eines Hundes zuverlässig zu unterbinden, werden sie meist an einer automatisch aufrollbaren Leine geführt. Durch verschiedene Hundeschulen und Trainingsprogramme wird versucht, dem Hund ausreichenden Gehorsam beizubringen, damit er unter Aufsicht auch frei laufen kann. Dabei bleibt jedoch das Risiko, dass der Hund seinem natürlichen Trieb folgt und durch Kommandos seines Tierhalters nicht mehr erreichbar ist.

Aus der DE 102010047219 B3 ist eine Vorrichtung zum Stoppen von Tieren bekannt, die insbesondere für Hunde vorgesehen ist diesen mit einem Geschirr oder einem Gurt angelegt wird. An dem Gurt ist ein aufblasbares Luftkissen angebracht, das zwischen den Vorderläufen oder zwischen den Hinterläufen angeordnet ist. Das Aufblasen der Luftkissen wird z. B. durch eine Fernbedienung ausgelöst. In aufgeblasenem Zustand wirkt das Luftkissen derart, dass es die Vorder- oder Hinterläufe des Hundes auseinander grätscht oder zusammendrückt. Alternative expandiert das zwischen den Vorderläufen sitzende Luftkissen nach unten, so dass der Hund angehoben wird und seine Läufe keinen Kontakt mehr zum Boden haben. In jedem Fall wird der Hund vollständig und abrupt an einer Laufbewegung gehindert, so dass ein Sturz wahrscheinlich ist und der Hund möglicherweise verletzt wird. Dieses System hat zur Folge, dass sich der Hund nicht mehr fortbewegen kann, also auch nicht zu seinem Tierhalter zurückkommen kann. Auch stellt ein seitliches Ausgrätschen oder ein Zusammendrücken nach Innen für einen Hund eine unnatürliche Bewegung dar, die für den Hund schmerzhaft ist und zu Verletzungen führen kann.

Aus US 8 726 844 B1 und US 8 408 163 B2 sind Halsbänder für Hunde bekannt, welche fernsteuerbare Elemente umfassen. Bei Aktivierung wird entweder ein flexibles Element aus dem Halsband freigegeben, durch welches der Hund in seiner Vorwärtsbewegung blockiert ist, oder es können an dem Halsband aufblasbare vorgesehen sein, welche das Halsband verengen.

Es ist eine Aufgabe der vorliegenden Erfindung, eine Vorrichtung zur Einschränkung oder Behinderung einer Laufbewegung eines Vierbeiners, insbesondere eine Hundes, bereitzustellen, mit welcher der Vierbeiner zuverlässig in seiner Bewegung behindert wird, ohne den Vierbeiner abrupt aufzuhalten oder völlig zu immobilisieren, die dem Vierbeiner keinen Schaden zufügt und ein Lernen des Vierbeiners unterstützt.

Diese Aufgabe wird von der Erfindung durch eine Vorrichtung zur Bewegungseinschränkung bei Vierbeinern nach Anspruch 1 gelöst. Vorteilhafte Ausgestaltungen und Ausführungsbeispiele sind in den abhängigen Ansprüchen beschrieben.

Eine Vorrichtung zur Bewegungseinschränkung bei Vierbeinern mit Vorder- und Hinterläufen, insbesondere zur Bewegungseinschränkung einer Laufbewegung bei Hunden, weist wenigstens einen aufblasbaren Ballon, eine an den wenigstens einen Ballon angeschlossene Gaspatrone zum Aufblasen des Ballons und einen Gurt, insbesondere ein Geschirr, zum Anlegen des Ballons am Vierbeiner auf. Als Ballon kann z. B. ein Kissen dienen, dessen Innenraum über eine Öffnung, vorzugsweise über ein Ventil, mit Gas gefüllt werden kann. Der Ballon kann z. B. aus Webmaterial oder Kunststofffolien gefertigt sein. Auch kann ein dehnbares Material gewählt werden, so dass das Volumen des Ballons vorteilhaft ausgedehnt werden kann. Als Gaspatrone kann z. B. eine Treibgaspatrone gewählt werden, wie sie aus der Lebensmitteltechnik oder Sicherheitstechnik bekannt sind. Der Gurt kann aus mehreren Riemen bestehen, die mittels einem oder mehreren Verschlüssen um den Körper des Vierbeiners angebracht werden können. Die Riemen können Verstelleinrichtungen aufweisen, um die Grösse des Gurts, bzw. die Längen der Riemen an die Körperform anpassen zu können.

Der wenigstens eine Ballon und die Gaspatrone sind derart am Gurt angebracht, dass der wenigstens eine Ballon an einer Unterseite des Vierbeiners zu liegen kommt, wenn der Gurt am Vierbeiner befestigt ist. In einem Ausgangszustand ist der wenigstens eine Ballon, bzw. es sind alle Ballone, der Vorrichtung in einem nicht-aufgeblasenen, komprimierten Zustand. In dem Ausgangszustand hat der Ballon oder haben die Ballone eine Grösse, in der der Vierbeiner nicht behindert wird.

Der wenigstens eine Ballon ist an der Unterseite des Vierbeiners in einem Ballonbereich angeordnet, der zwischen den Vorderläufen und den Hinterläufen vorgesehen ist. Der Ballonbereich befindet sich also z. B. an der Brust oder am Bauch des Vierbeiners. Dabei ist es wichtig, dass der Ballon oder die Ballone hinter den Vorderläufen und vor den Hinterläufen liegt, bzw. liegen. Dadurch kann sichergestellt werden, dass der Vierbeiner nicht bereits in einem Ausgangszustand mit komprimierten Ballonen in seiner Laufbewegung eingeschränkt wird und auch mit expandierten Ballonen nicht in eine unnatürliche Körperhaltung gezwungen wird.

Sobald der wenigstens eine Ballon oder wenigstens ein Ballon von mehreren in einem aufgeblasenen, expandierten Zustand ist, ragt der durch den oder die Ballone eingenommene Ballonbereich zumindest teilweise in einen Laufbereich des Vierbeiners. Dabei ist der Laufbereich durch den Bereich bestimmt ist, in dem eine Laufbewegung der Vorder- und/oder der Hinterläufe stattfindet, d. h. der Laufbereich wird durch den freien Raum um seine Vorder- und Hinterläufe bestimmt, den der Vierbeiner benötigt, um seine Laufbewegung ausführen zu können. Der Ballonbereich ragt somit in expandiertem Zustand in den Laufbereich hinein und behindert dadurch die Laufbewegung. Der Vierbeiner wird daran gehindert, den vollen Laufbereich auszunutzen, weil er an den expandierten Ballon oder an die expandierten Ballone stösst. Hingegen ragt der wenigstens eine Ballon im Ausgangszustand nicht oder nur unwesentlich in den Laufbereich und schränkt somit die Laufbewegung auch nicht ein.

Auch in einem expandierten Zustand der Vorrichtung zur Bewegungseinschränkung bleibt der Vierbeiner mobil, kann jedoch nur eingeschränkte und deshalb langsamere Bewegungen ausführen. Es bleibt ihm die Möglichkeit in verlangsamtem Tempo zu seinem Tierhalter zurückzukehren. Die Vorrichtung ruft bei der Bewegungseinschränkung keinerlei schmerzhafte Situationen hervor und gefährdet den Vierbeiner nicht. Bevorzugt wird der Ballon oder werden die mehreren Ballone nur langsam mit Gas gefüllt, z. B. über mehrere Sekunden, und werden nicht prall aufgefüllt, um den Vierbeiner nicht zu erschrecken.

In einer vorteilhaften Ausführungsform umfasst die Vorrichtung zur Bewegungseinschränkung mehrere Ballone, beispielsweise zwei, vier, sechs oder acht Ballone, nebeneinander, die gemeinsam ein Mehrkammersystem, bzw. Mehrballonsystem, bilden. Vorzugsweise sind wenigstens zwei Ballone in Reihe an die Gaspatrone angeschlossen sind, so dass ein sukzessives Aufblasen der Ballone nacheinander erfolgt. Beispielsweise ist hierfür in einem Durchgang von einem Ballon zum nächsten Ballon ein Überdruckventil vorgesehen.

Es können z. B. auch vier Ballone vorgesehen sein, wobei zunächst zwei Ballone gleichzeitig und daran anschliessend die zwei weiteren Ballone gleichzeitig aufgeblasen werden. Vorteilhaft sind wenigstens zwei Ballone in Längsrichtung des Vierbeiners hintereinander angeordnet und strömungstechnisch aneinander angeschlossen. Ein erster Ballon ist z. B. im Brustbereich oder vorderen Bauchbereich und ein zweiter Ballon im Bauchbereich, bzw. hinteren Bauchbereich, vorgesehen. Somit kann zunächst ein Laufbereich der Vorderläufe durch den im Brustbereich oder vorderen Bauchbereich aufgeblasenen Ballon und anschliessend ein Laufbereich der Hinterläufe durch den im Bauchbereich, bzw. hinteren Bauchbereich, aufgeblasenen Ballon verkleinert werden. Weiter ist es vorteilhaft, wenigstens zwei Ballone vertikal übereinander anzuordnen. Somit kann z. B. zuerst ein erster, körpernaher Ballon und anschliessend ein zweiter köperferner Ballon aufgeblasen werden. Damit kann der Laufbereich zunehmend immer mehr eingeschränkt werden, indem der Ballonbereich der expandierten Ballone fortschreitend vergrössert wird.

In einer Ausführungsform der Vorrichtung zur Bewegungseinschränkung bei Vierbeinern nach der vorliegenden Erfindung ist eine Steuereinheit zum Auslösen einer Gasentladung aus der Gaspatrone zum Aufblasen des wenigstens einen Ballons vorgesehen. Dabei kann das Auslösen z. B. einstufig erfolgen, wobei durch eine Aktivierung der Vorrichtung alle Ballone gleichzeitig oder ohne Unterbrechung des Gasstroms aus der Gaspatrone sukzessive aufgeblasen werden. Alternativ kann das Auslösen zwei- oder mehrstufig erfolgen, wobei durch ein erstes Aktivieren ein erster Ballon oder ein erster Satz von Ballonen aufgeblasen wird und durch ein zweites Aktivieren ein zweiter Ballon oder ein zweiter Satz von Ballonen aufgeblasen wird. Es ist also ein aufeinanderfolgendes Aufblasen von jeweils einem oder mehreren Ballonen vorgesehen, wobei der Gasstrom unterbrochen wird und erst durch ein erneutes Aktivieren der Vorrichtung fortgesetzt wird.

Die Steuereinheit kann weiter einen Signaltongeber und/oder einen Geschwindigkeitsmesser zum Erfassen einer Geschwindigkeit des Vierbeiners umfassen. Indem der Signaltongeber unabhängig vom Aufblasen eines Ballons oder eines Mehrkammersystems ein Warnsignal abgeben kann, ist es möglich, den Vierbeiner dahingehend zu konditionieren, dass er bereits zu seinem Tierhalter zurückkehrt, wenn er nur das Warnsignal hört. Hierfür wird trainiert, indem das Warnsignal beispielsweise ferngesteuert abgegeben wird, und anschliessend die Vorrichtung zur Bewegungseinschränkung aktiviert wird, wenn der Vierbeiner nicht zurückkehrt. Die Bewegungseinschränkung ist für das Tier unangenehm und es wird lernen bereits bei dem Warnsignal umzukehren.

Mittels dem Geschwindigkeitsmesser kann die Steuereinheit ein Aufblasen des wenigstens einen Ballons automatisch aktivieren, wenn der Geschwindigkeitsmesser eine vorbestimmte Mindestgeschwindigkeit des Vierbeiners ermittelt. Alternativ kann dem Tierhalter ein Rückmeldungssignal übermittelt werden, das angibt, dass eine vorbestimmte Mindestgeschwindigkeit überschritten wurde, so dass der Tierhalter das Aufblasen z. B. ferngesteuert aktivieren kann. Als Geschwindigkeitsmesser kann z. B. ein GPS-Gerät oder ein Schrittzähler verwendet werden, wie sie allgemein bekannt sind. Die Mindestgeschwindigkeit kann individuell auf einen bestimmten Vierbeiner abgestimmt werden und die Steuereinheit entsprechend programmiert werden.

In einer Ausführungsform ist der wenigstens eine Ballon oder das Mehrkammersystem in einer Umhüllung mit einer Verschlusseinrichtung untergebracht. Die Umhüllung kann z. B. eine Stoff- oder Kunststofftasche sein. Die Verschlusseinrichtung öffnet sich bei einem Aufblasen des Ballons automatisch und ist wiederverschliessbar. Beispielsweise wird die Verschlusseinrichtung durch eine Druckknopfeinrichtung, einen Klettverschluss oder einen Zip-Verschluss realisiert. Bei Aktivierung der Vorrichtung zur Bewegungseinschränkung öffnet die Expansion eines Ballons oder mehrerer Ballone die Verschlusseinreichung, sodass sich die Ballone ausdehnen können. Die Vorrichtung zur Bewegungseinschränkung kann nach einem Aufblasen des Ballons oder des Mehrkammersystems wieder in ihren Ausgangszustand mit komprimierten Ballonen zurück versetzt werden, indem das Gas aus den Ballonen entleert wird und die Ballone wieder innerhalb der Umhüllung untergebracht werden.

Vorzugsweis ist die Gaspatrone austauschbar an den Ballon oder das Mehrkammersystem angeschlossen, so dass die Vorrichtung durch Anschliessen einer neuen Gaspatrone für eine nächste Aktivierung bereit ist. In einer Variante ist die Gaspatrone in einer Aufnahmekammer angeordnet ist, die an wenigstens einen Ballon grenzt oder innerhalb eines Ballons liegt, wobei eine Grenzwand zwischen Aufnahmekammer und Ballon eine durchlässig ist, vorzugsweise semipermeabel durchlässig, oder z. B. eine Perforation aufweist. Ein aus der Gaspatrone ausströmendes Gas kann somit durch die Perforation in einen Ballon und von diesem vorzugsweise weiter in einen anschliessenden Ballon expandieren. Alternativ kann die Gaspatrone auch ausserhalb der Ballone, insbesondere auch ausserhalb der Umhüllung, angeordnet sein und über eine Leitung, wie etwa einen Schlauch an den oder die Ballone angeschlossen sein. Die Gaspatrone kann getrennt von dem Ballon oder dem Mehrkammersystem an dem Gurt angeordnet werden.

Die Technik des Aufblasens von Ballonen oder Luftkissen ist grundsätzlich z. B. von Airbags im Bereich der Lawinensicherheit oder bei Wasserrettungsmitteln bekannt und muss daher hier nicht weiter ausgeführt werden. Eine Steuerung des Aufblasens der Ballone kann z. B. wie oben erläutert erfolgen. Weitere spezifische Details bzgl. des Aufblasens der Ballone bei der Vorrichtung zur Bewegungseinschränkung nach der vorliegenden Erfindung werden auch in der Figurenbeschreibung offenbart.

Gegenüber dem eingangs geschilderten Stand der Technik ist es ein Vorteil der Vorrichtung zur Bewegungseinschränkung nach der vorliegenden Erfindung, dass ein Vierbeiner, insbesondere ein Hund, im Stand oder bei einer langsamen Bewegung von der Vorrichtung nicht beeinträchtigt oder gar verletzt wird, weil der Ballonbereich im expandierten Zustand nicht in den Standbereich oder den Laufbereich einer langsamen Bewegung eindringt. Erst wenn der Laufbereich ausgedehnt wird, wie es bei schnellen Bewegungen der Fall ist, überlappt der expandierte Ballonbereich mit dem Laufbereich und schränkt die Laufbewegung ein. Der Hund lernt also, dass eine langsame Bewegung ein Stehenbleiben ohne negative Folgen möglich ist, während ein schnelles Davonlaufen unterbunden wird. Indem der Laufbereich durch das sukzessive Aufblasen von Ballonen kontrolliert zunehmend eingeschränkt werden kann, wird die Verletzungsgefahr bei der Bewegungseinschränkung minimiert. Im Unterschied dazu könnte ein plötzliches Aufblasen aller Ballone den Hund zum Stolpern oder zu Fall bringen.

Die Erfindung wurde an Hand mehrerer Ausführungsformen dargestellt. Die einzelnen technischen Merkmale einer Ausführungsform können durchaus auch in Kombination mit einer anderen Ausführungsform mit den dargelegten Vorteilen verwendet werden. Die Beschreibung der erfindungsgemässen technischen Merkmale ist daher nicht auf die jeweilige Ausführungsform beschränkt.

Vorteilhafte Ausführungsformen der Erfindung werden im Folgenden anhand der Zeichnungen dargestellt, die lediglich zur Erläuterung dienen und nicht einschränkend auszulegen sind. Aus den Zeichnungen offenbar werdende Merkmale der Erfindung sollen einzeln und in jeder Kombination als zur Offenbarung der Erfindung gehörend betrachtet werden. In den Zeichnungen zeigen:
- Fig. 1: eine seitliche Ansicht einer Vorrichtung zur Bewegungseinschränkung nach der Erfindung, die an einem Hund angeordnet ist, in einem Ausgangszustand,
- Fig. 2: eine seitliche Ansicht der Vorrichtung zur Bewegungseinschränkung aus Figur 1 in einem vollständig expandierten Zustand,
- Fig. 3: eine Vorderansicht einer ersten Variante einer Vorrichtung zur Bewegungseinschränkung, die an einem Hund angeordnet ist,
- Fig. 4: eine Vorderansicht einer zweiten Variante einer Vorrichtung zur Bewegungseinschränkung, die an einem Hund angeordnet ist,
- Fig. 5: eine schematische seitliche Ansicht einer dritten Variante einer Vorrichtung zur Bewegungseinschränkung,
- Fig. 6: eine beispielhafte dreidimensionale Ansicht eines Mehrkammersystems wie es bei einer Vorrichtung zur Bewegungseinschränkung verwendet wird,
- Fig. 7: eine Schnittansicht durch einen Ballon des Mehrkammersystems mit eingesetzter Gaspatrone und
- Fig. 8: eine Explosionsansicht eines Ballons mit einsetzbarer Gaspatrone.

In den Figuren wird die Vorrichtung zur Bewegungseinschränkung bei Vierbeinern gemäss der Erfindung am Beispiel ihrer Anwendung bei einem Hund gezeigt. Grundsätzlich ist die Vorrichtung aber zur Anwendung bei anderen Vierbeinern geeignet.

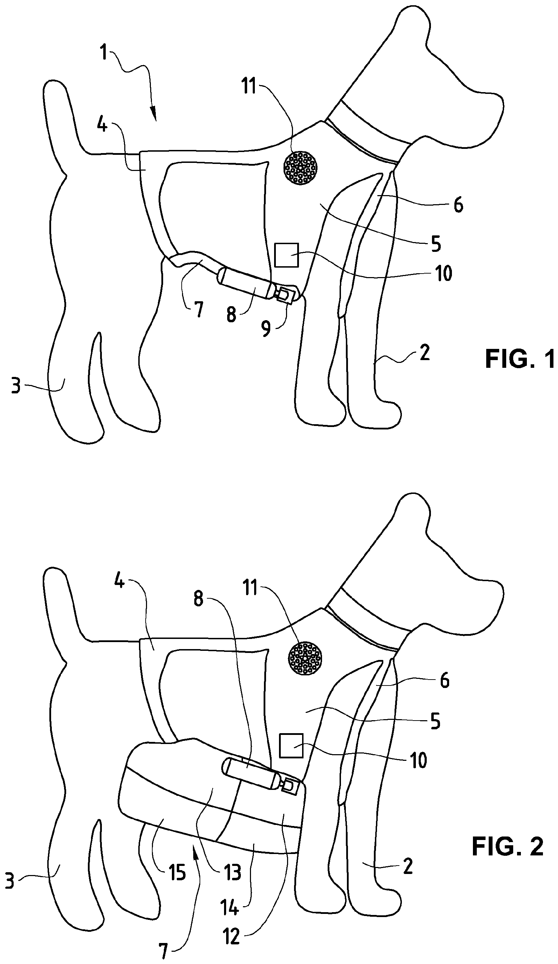

In Figur 1 ist die Vorrichtung zur Bewegungseinschränkung mittels einem Gurt 1 an dem Hund mit Vorderläufen 2 und Hinterläufen 3 angelegt. Der Gurt weist mehrere Riemen auf, wovon ein erster Riemen 4 um die Hüfte des Hundes und ein zweiter Riemen 5 um den Brustkorb des Hundes vorgesehen sind. Ein Brustriemen 6 kann um den Hals und zwischen den Vorderläufen mit dem zweiten Riemen 5 verbunden sein, um ein nach hinten Rutschen des Gurtes 1 am Hund zu verhindern. Die Riemen können durch Verschlusseinrichtungen geöffnet und geschlossen werden, um den Gurt anlegen oder abnehmen zu können. Weiter können die Riemen eine Verstelleinrichtung aufweisen, um die Riemen in ihrer Länge anzupassen.

An einer Unterseite des Hundes sind mehrere komprimierte, aufblasbare Ballone am Gurt angeordnet, die gemeinsam ein Mehrkammersystem 7 bilden. Die einzelnen Ballone bilden dabei die Kammern des Systems. Das Mehrkammersystem 7 ist zwischen dem ersten Riemen 4 und dem zweiten Riemen 5 im Bereich von Bauch und Brust des Hundes angeordnet.

In der Nähe des Mehrkammersystems 7 ist eine Gaspatrone 8 angebracht, die mit den aufblasbaren Ballonen verbunden ist. Im Ausgangszustand ist die Gaspatrone 8 durch ein Ventil 9 geschlossen. Am Gurt 1, in dieser Variante am zweiten Riemen 5, sind eine Steuereinheit 10 und ein Signaltongeber 11 angebracht. Optional kann am Gurt auch ein Geschwindigkeitsmesser angebracht sein oder ein Geschwindigkeitsmesser ist in der Steuereinheit integriert. Das Mehrkammersystem 7 ist zwischen den Vorderläufen 2 und den Hinterläufen 3 vorgesehen. Keiner der Ballone des Mehrkammersystems ragt aber zwischen die beiden Vorderläufe 2 oder zwischen die beiden Hinterläufe 3 hinein. Die Ballone des Mehrkammersystems 7 definieren daher einen Ballonbereich, der sich ausschliesslich zwischen den Vorderläufen 2 und den Hinterläufen 3 erstreckt.

In Figur 2 ist die Vorrichtung zur Bewegungseinschränkung in einem vollständig expandierten Zustand gezeigt, in dem alle vier Ballone 12, 13, 14 und 15 des Mehrkammersystems 7 expandiert sind. Wenn die Ballone in einem aufgeblasenen Zustand sind, ist auch der Ballonbereich vergrössert und zwar derart, dass der Ballonbereich in einen Laufbereich ragt, der durch den Raumbedarf bei einer Laufbewegung der Vorder- und/oder Hinterläufe definiert ist. Obgleich in Figur 2 bereits alle Ballone 12, 13, 14 und 15 in aufgeblasenem Zustand gezeigt sind, überlappt der Ballonbereich bereits mit dem Laufbereich, wenn wenigstens ein Ballon, z. B. der Ballon 12, aufgeblasen ist. Die Überlappung zwischen Ballonbereich und Laufbereich nimmt mit dem Aufblasen weiterer Ballone zu, so dass der Ballonbereich zunehmend weiter in den Laufbereich hineinragt und eine zunehmend grössere Behinderung der Laufbewegung der Vorderläufe 2 und/oder der Hinterläufe 3 erwirkt.

Wie eingangs beschrieben können die Ballone 12, 13, 14 und 15 sukzessive aufgeblasen werden. Beispielsweise können die Ballone derart untereinander verbunden sein, dass ein Treibgas aus der Gaspatrone zuerst den Ballon 12, dann den Ballon 13, den Ballon 14 und zuletzt den Ballon 15 füllt. Es kann aber auch zuerst ein erster Satz von Ballonen, z. B. bestehend aus den körpernahen Ballonen 12 und 13, und anschliessend ein zweiter Satz von Ballonen, z. B. bestehend aus den körperfernen Ballonen 14 und 15, aufgeblasen werden. Die Reihenfolge des Aufblasens der Ballone kann z. B. von der Grösse oder von den Laufgewohnheiten eines Vierbeiners abhängen. Zwischen den einzelnen Ballonen können Ventile, z. B. Überdruckventile, vorgesehen sein, um ein sukzessives Aufblasen zu gewährleisten, wie später genauer erläutert wird.

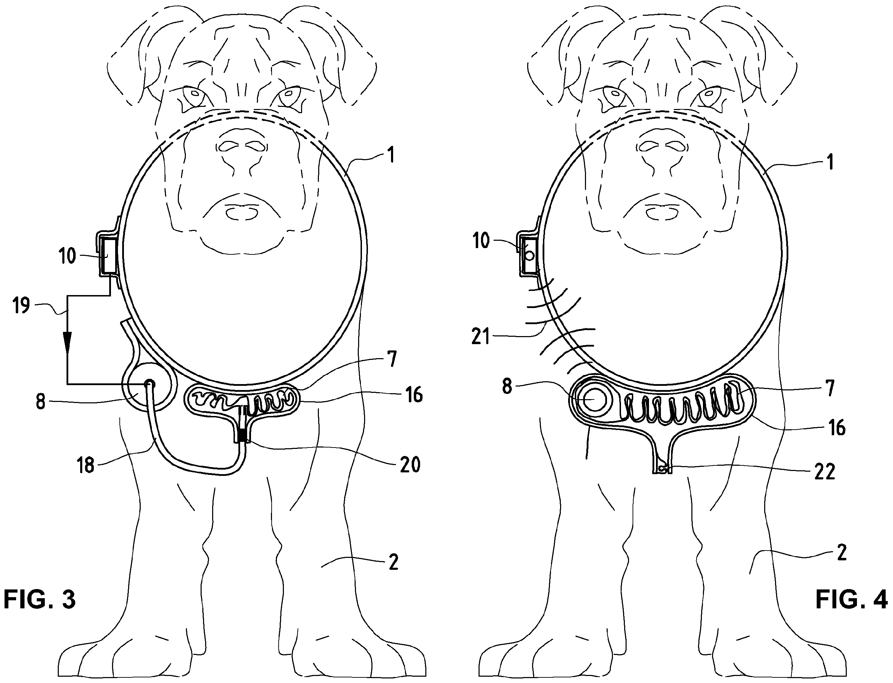

Figur 3 zeigt schematisch eine erste Variante einer Vorrichtung zur Bewegungseinschränkung nach der Erfindung. Das Mehrkammersystem 7 ist in komprimiertem Zustand in einer Umhüllung 16 untergebracht, die am Gurt 1 befestigt ist. Die Umhüllung besteht aus einer flexiblen Tasche, die in einem nach unten weisenden Abschnitt eine Öffnung hat, durch die die Ballone heraus expandieren können. In dem gezeigten komprimierten Zustand der Ballone ist die Öffnung in dieser Variante durch ein Druckknopfsystem 20 verschlossen. Weiter ist am Gurt 1 eine Halterung zum Halten der Gaspatrone 8 vorgesehen. Die Gaspatrone 8 ist durch eine Leitung 18 mit dem Mehrkammersystem 7 verbunden. Ebenfalls ist die Steuereinheit 10 am Gurt 1 befestigt und durch einen elektrischen Anschluss 19 mit der Gaspatrone 8 verbunden.

Figur 4 zeigt schematisch eine zweite Variante einer Vorrichtung zur Bewegungseinschränkung nach der Erfindung. Auch die zweite Variante weist einen Gurt 1 mit der Steuereinheit 10 und mit einer Umhüllung 16 für das Mehrkammersystem 7 auf. Die Gaspatrone 8 ist innerhalb der Umhüllung 16 gehalten und mit den Ballonen verbunden. Anstelle des elektrischen Anschlusses 19 ist zwischen der Steuereinheit 10 und der Gaspatrone 8 eine Funkverbindung 21 vorgesehen, um das Aufblasen der Ballone auszulösen. Die Öffnung der Umhüllung 16 ist im komprimierten Ausgangszustand der Ballone durch eine Schnappverbindung 22, wie z. B. einen Zip-Verschluss, verschlossen.

In dem in den Figuren 3 und 4 gezeigten Ausgangszustand mit komprimiertem Mehrkammersystem 7 kann sich der Hund frei bewegen und den Laufbereich voll ausschöpfen. Er wird durch die Vorrichtung zur Bewegungseinschränkung nicht behindert. Durch ein Aktivieren der Vorrichtung zur Bewegungseinschränkung mittels der Steuereinheit 10 wird das Aufblasen des Mehrkammersystems 7 ausgelöst. Beim Expandieren der Ballone wird das Druckknopfsystem 20, bzw. die Schnappverbindung 22, durch den Druck der Ballone geöffnet und die Ballone können aus der Umhüllung 16 austreten und in den Laufbereich des Hundes eindringen. Im expandierten Zustand der Ballone wird der Hund an einer freien Laufbewegung gehindert, indem der Ballonbereich durch Aufblasen der Ballone in den Laufbereich ausgedehnt wird.

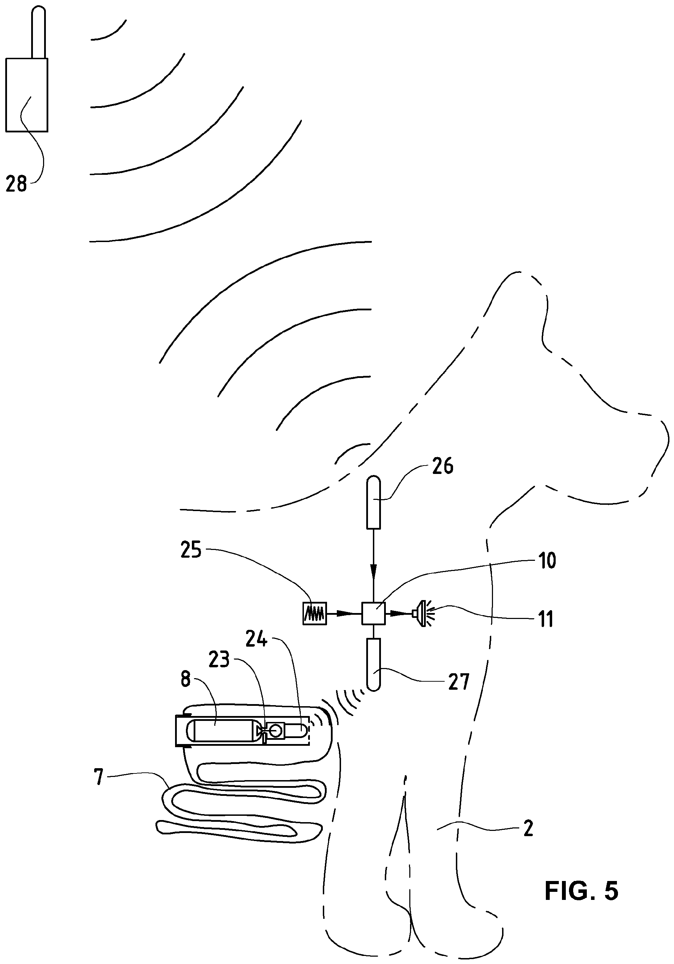

In Figur 5 ist schematisch eine dritte Variante einer Vorrichtung zur Bewegungseinschränkung nach der Erfindung gezeigt. Für eine verbesserte Übersicht werden der Gurt und die Umhüllung zeichnerisch weggelassen. Es ist wiederum ein Mehrkammersystem 7, eine daran angeschlossene Gaspatrone 8 und eine Steuereinheit 10 vorgesehen. Die Gaspatrone 8 weist ein Ventil 23 mit einem Empfänger 24 auf. Die Steuereinheit 10 umfasst einen Geschwindigkeitsmesser 25, z. B. in Form eines Schrittfrequenzzählers, einen Signaltongeber 11, eine Sende- und Empfangseinheit 26 und einen Sender 27. Die Sende- und Empfangseinheit 26 kann drahtlos mit einer Fernbedienung 28, die beim Tierhalter verbleibt, kommunizieren. Der Sender 27 der Steuereinheit 10 kommuniziert ebenfalls drahtlos mit dem Empfänger 24 am Ventil 23 der Gaspatrone 8. Der Tierhalter kann mittels der Fernbedienung 28 die Steuereinheit 10 derart betätigen, dass mittels des Signaltongebers 11 ein Warnton für den Hund abgegeben wird. Ferner kann der Tierhalter mittels der Fernbedienung 28 die Steuereinheit 10 derart betätigen, dass mittels des Senders 27 über den Empfänger 24 das Ventil 23 geöffnet und das Aufblasen des Mehrkammersystems 7 ausgelöst wird. Der Geschwindigkeitsmesser 25 erfasst die Geschwindigkeit des Hundes und mittels der Sende- und Empfangseinheit 26 kann ein Geschwindigkeitssignal zur Information des Tierhalters an die Fernbedienung 28 übertragen werden. Optional kann die Steuereinheit auch eine GPS-Einheit zur Ortung des Hundes umfassen und mittels der Sende- und Empfangseinheit 26 ein Standortsignal an den Tierhalter übermitteln. Der Tierhalter kann nun entscheiden, ob er einen Warnton auslösen will, um den Hund zurückzurufen, ob er das Mehrkammersystem 7 auslösen will, einstufig oder mehrstufig, wie oben beschrieben, oder ob er beides gleichzeitig ausführen will.

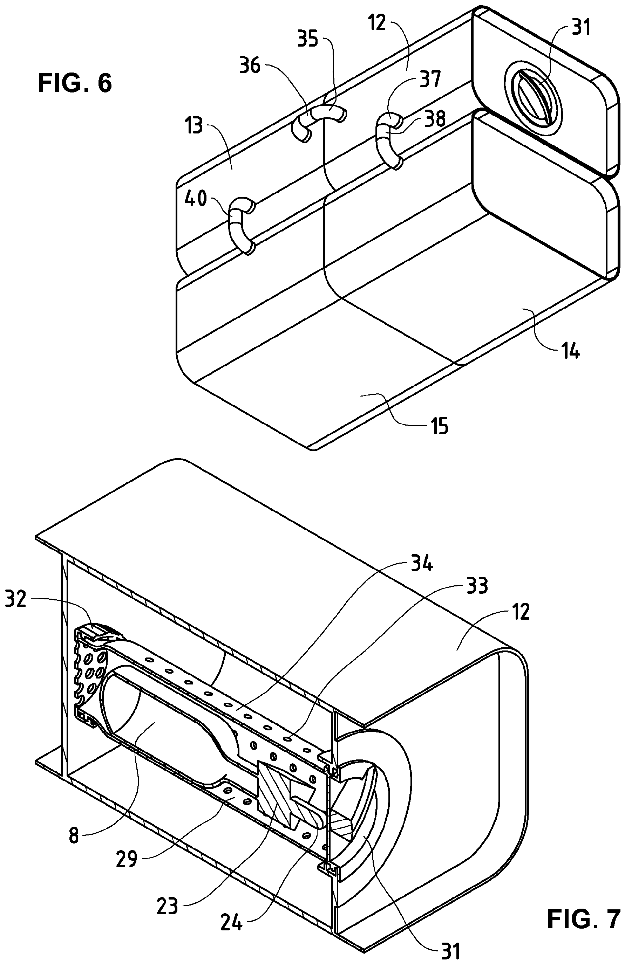

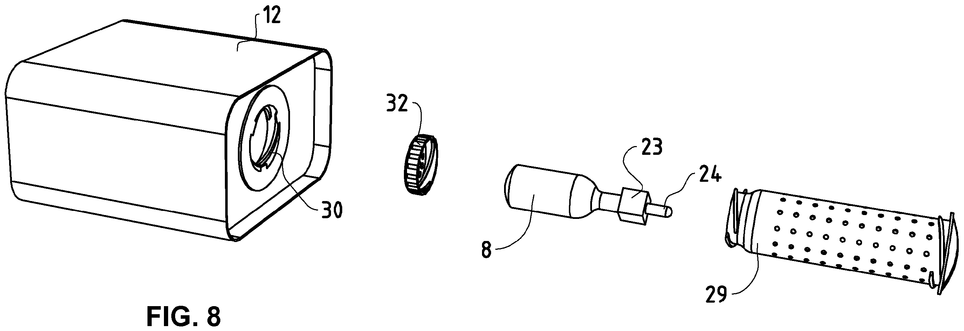

In den Figuren 6 bis 8 ist schematisch ein Mehrkammersystem 7 mit Ballonen 12, 13, 14 und 15 in einem expandierten Zustand gezeigt. In dem Ballon 12 ist eine Aufnahmekammer 29 zur Aufnahme einer Gaspatrone 8 untergebracht. Die Gaspatrone 8 umfasst das Ventil 23 und den Empfänger 24. Die Gaspatrone 8 kann in die Aufnahmekammer 29 eingeschoben werden. Die Aufnahmekammer 29 kann gemeinsam mit der Gaspatrone 8 durch eine Öffnung 30 in den Ballon 12 eingesetzt werden. Durch einen Schraubdeckel 31 kann die Aufnahmekammer 29 verschlossen und in einer Verschraubung an der Öffnung 30 gehalten werden. Auf der gegenüberliegenden Seite kann die Aufnahmekammer 29 z. B. durch eine Schraubkappe 32 verschlossen werden. Die Aufnahmekammer 29 weist eine Wandung mit einer Perforation 33 auf, die eine Grenzwand 34 zum Volumen des Ballons 12 darstellt und einen Gasdurchlass von der Aufnahmekammer 29 in den Ballon 12 erlaubt.

Von dem Ballon 12 führt eine erste Gasleitung 35 mit einem ersten Überdruckventil 36 in den Ballon 13, der in Längsrichtung des Hundes hinter dem Ballon 12 angeordnet ist, wie in Figur 2 ersichtlich ist. Die Ballone 12 und 13 sind körpernah am Hund vorgesehen, d. h. sie liegen am Körper an oder haben nur einen geringen Abstand zum Körper. Ferner führt von dem Ballon 12 eine zweite Gasleitung 37 mit einem zweiten Überdruckventil 38 in den Ballon 14, der unterhalb des Ballons 12 angeordnet ist. Von dem Ballon 13 führt eine dritte Gasleitung 39 mit einem dritten Überdruckventil 40 in den Ballon 15, der unterhalb des Ballons 13 und in Längsrichtung des Hundes hinter dem Ballon 14 angeordnet ist. Die Ballone 14 und 15 sind körperfern am Hund vorgesehen, d. h. sie sind entfernt vom Körper angeordnet und haben einen grösseren Abstand zum Körper als die körpernahen Ballone 12 und 13.

Die Überdruckventile 36, 38 und 40 können gleich ausgelegt sein oder jeweils bei unterschiedlichen Drücken einen Durchlass des Gases erlauben. Damit kann Einfluss auf die Reihenfolge genommen werden, in der die Ballone 12, 13, 14 und 15 befüllt werden. Schalten die Überdruckventile 36, 38 und 40 z. B. bei einem gleichen Nenngasdruck auf Durchgang, wird zuerst der Ballon 12 gefüllt bis der Nenngasdruck erreicht ist. Dann werden über den Ballon 12 gleichzeitig die Ballone 13 und 14 gefüllt. Ist im Ballon 13 der Nenngasdruck erreicht wird zuletzt der Ballon 15 gefüllt. Die Ballone werden also sukzessive gefüllt und können dadurch immer weiter in den Laufbereich des Hundes eindringen. Eine andere Reihenfolge kann durch geänderte Überdruckventile oder eine geänderte Führung der Gasleitungen bewirkt werden.

Nach einem Einsatz der Vorrichtung zur Bewegungseinschränkung kann die Gaspatrone 8 ausgetauscht und das Mehrkammersystem wieder komprimiert und in der Umhüllung 16 verstaut werden. Somit ist es für einen nächsten Einsatz bereit.

**Bezugszeichen**

| | | | |
|---|---|---|---|
| 1 | Gurt | 23 | Ventil |
| 2 | Vorderläufe | 24 | Empfänger |
| 3 | Hinterläufe | 25 | Geschwindigkeitsmesser |
| 4 | erster Riemen | 26 | Sende- und Empfangseinheit |
| 5 | zweiter Riemen | | |
| 6 | Brustriemen | 27 | Sender |
| 7 | Mehrkammersystem | 28 | Fernbedienung |
| 8 | Gaspatrone | 29 | Aufnahmekammer |
| 9 | Ventil | 30 | Öffnung |
| 10 | Steuereinheit | 31 | Schraubdeckel |
| 11 | Signaltongeber | 32 | Schraubkappe |
| 12 | Ballon | 33 | Perforation |
| 13 | Ballon | 34 | Grenzwand |
| 14 | Ballon | 35 | erste Gasleitung |
| 15 | Ballon | 36 | erstes Überdruckventil |
| 16 | Umhüllung | 37 | zweite Gasleitung |
| 18 | Leitung | 38 | zweites Überdruckventil |
| 19 | elektrischer Anschluss | 39 | dritte Gasleitung |
| 20 | Druckknopfsystem | 40 | drittes Überdruckventil |
| 21 | Funkverbindung | | |
| 22 | Schnappverbindung | | |

## Patentansprüche

1. Vorrichtung zur Bewegungseinschränkung bei Vierbeinern mit Vorder- und Hinterläufen, insbesondere bei Hunden, mit wenigstens einem aufblasbaren Ballon (12, 13, 14, 15), einer an den wenigstens einen Ballon (12, 13, 14, 15) angeschlossenen Gaspatrone (8) zum Aufblasen des wenigstens einen Ballons (12, 13, 14, 15) und einem Gurt (1) zum Anlegen des wenigstens einen Ballons (12, 13, 14, 15) am Vierbeiner, **dadurch gekennzeichnet, dass**
der Gurt (1) derart ausgelegt ist, dass der wenigstens eine Ballon (12, 13, 14, 15) an einer Unterseite des Vierbeiners in einem Ballonbereich angeordnet ist, der hinter den Vorderläufen (2) und vor den Hinterläufen (3) vorgesehen ist und zumindest teilweise in einen Laufbereich bei einer Laufbewegung der Vorder- und/oder Hinterläufe ragt, wenn der wenigstens eine Ballon (12, 13, 14, 15) in einem aufgeblasenen Zustand ist.

2. Vorrichtung zur Bewegungseinschränkung bei Vierbeinern nach Anspruch 1, **dadurch gekennzeichnet, dass** mehrere Ballone (12, 13, 14, 15) nebeneinander vorgesehen sind und gemeinsam ein Mehrkammersystem (7) bilden.

3. Vorrichtung zur Bewegungseinschränkung bei Vierbeinern nach Anspruch 1 oder 2, **dadurch gekennzeichnet, dass** wenigstens zwei Ballone (12, 13) in Reihe an die Gaspatrone angeschlossen sind derart, dass ein sukzessives Aufblasen der Ballone (12, 13) erfolgt.

4. Vorrichtung zur Bewegungseinschränkung bei Vierbeinern nach einem der vorhergehenden Ansprüche, **dadurch gekennzeichnet, dass** wenigstens zwei Ballone (12, 13) in Längsrichtung des Vierbeiners hintereinander angeordnet und aneinander angeschlossen sind.

5. Vorrichtung zur Bewegungseinschränkung bei Vierbeinern nach einem der vorhergehenden Ansprüche, **dadurch gekennzeichnet, dass** wenigstens zwei Ballone (12, 14) vertikal übereinander angeordnet und aneinander angeschlossen sind.

6. Vorrichtung zur Bewegungseinschränkung bei Vierbeinern nach einem der vorhergehenden Ansprüche, **dadurch gekennzeichnet, dass** eine Steuereinheit (10) zum zwei- oder mehrstufigen Auslösen einer Gasentladung aus der Gaspatrone (8) zum aufeinanderfolgenden Aufblasen von jeweils einem oder mehreren Ballonen (12, 13, 14, 15) vorgesehen ist.

7. Vorrichtung zur Bewegungseinschränkung bei Vierbeinern nach einem der vorhergehenden Ansprüche, **dadurch gekennzeichnet, dass** eine Steuereinheit (10) zum Auslösen einer Gasentladung aus der Gaspatrone (8) zum Aufblasen des wenigstens einen Ballons (12, 13, 14, 15) vorgesehen ist, die einen Signaltongeber (11) und/oder einen Geschwindigkeitsmesser (25) zum Erfassen einer Geschwindigkeit des Vierbeiners umfasst.

8. Vorrichtung zur Bewegungseinschränkung bei Vierbeinern nach Anspruch 7, **dadurch gekennzeichnet, dass** mittels des Signaltongebers (11) unabhängig von einem Aufblasen eines Ballons ein Warnsignal erzeugbar ist.

9. Vorrichtung zur Bewegungseinschränkung bei Vierbeinern nach Anspruch 7 oder 8, **dadurch gekennzeichnet, dass** die Steuereinheit (10) derart ausgelegt ist, dass ein Aufblasen des wenigstens einen Ballons (12, 13, 14, 15) automatisch erfolgt, wenn der Geschwindigkeitsmesser (25) eine vorbestimmte Mindestgeschwindigkeit des Vierbeiners ermittelt.

10. Vorrichtung zur Bewegungseinschränkung bei Vierbeinern nach einem der vorhergehenden Ansprüche 7 bis 9, **dadurch gekennzeichnet, dass** die Gaspatrone (8) und/oder der Signaltongeber (11) ferngesteuert betätigbar sind.

11. Vorrichtung zur Bewegungseinschränkung bei Vierbeinern nach einem der vorhergehenden Ansprüche, **dadurch gekennzeichnet, dass** der wenigstens eine Ballon (12, 13, 14, 15) in einer Umhüllung (16) mit einer Verschlusseinrichtung (20; 22) untergebracht ist, die bei einem Aufblasen des Ballons automatisch öffnet und wiederverschliessbar ist.

12. Vorrichtung zur Bewegungseinschränkung bei Vierbeinern nach einem der vorhergehenden Ansprüche, **dadurch gekennzeichnet, dass** die Gaspatrone (8) austauschbar an den wenigstens einen Ballon (12, 13, 14, 15) angeschlossen ist.

13. Vorrichtung zur Bewegungseinschränkung bei Vierbeinern nach einem der vorhergehenden Ansprüche, **dadurch gekennzeichnet, dass** die Gaspatrone (8) in einer Aufnahmekammer (29) angeordnet ist, die an wenigstens einen Ballon (12, 13, 14, 15) grenzt, wobei eine Grenzwand (34) zwischen Aufnahmekammer (29) und Ballon (12) eine Perforation (33) aufweist.

## Claims

1. Device for limiting movement in quadrupeds with front and hind legs, in particular in dogs, with at least one inflatable balloon (12, 13, 14, 15), a gas cartridge (8) connected to the at least one balloon (12, 13, 14, 15) for inflating the at least one balloon (12, 13, 14, 15) and a belt (1) for attaching the at least one balloon (12, 13, 14, 15) to the quadruped, **characterized in that**
the belt (1) is designed in such a way that the at least one balloon (12, 13, 14, 15) is disposed on the lower side of the quadruped in a balloon area, which is provided behind the forelegs (2) and in front of the hind legs (3) and projects at least partially into a running area during a running movement of the front and/or hind legs when the at least one balloon (12, 13, 14, 15) is in an inflated state.

2. Device for limiting movement in quadrupeds according to claim 1, **characterized in that** a multiplicity of balloons (12, 13, 14, 15) are provided next to one another and form together a multi-chamber system (7).

3. Device for limiting movement in quadrupeds according to claim 1or 2, **characterized in that** at least two balloons (12, 13) are connected in series to the gas cartridge in such a way that a successive inflation of the balloons (12, 13) takes place.

4. Device for limiting movement in quadrupeds according to one of the preceding claims, **characterized in that** at least two balloons (12, 13) are disposed behind one another in longitudinal direction of the quadruped and are connected to one another.

5. Device for limiting movement in quadrupeds according to one of the preceding claims, **characterized in that** at least two balloons (12, 14) are disposed vertically one over the other and are connected to one another.

6. Device for limiting movement in quadrupeds according to one of the preceding claims, **characterized in that** a control unit (10) is provided for double-stage or multi-stage triggering of a gas discharge out of the gas cartridge (8) for successive inflation of respectively one or more balloons (12, 13, 14, 15).

7. Device for limiting movement in quadrupeds according to one of the preceding claims, **characterized in that** a control unit (10) is provided for triggering a gas discharge out of the gas cartridge (8) for inflation of the at least one balloon (12, 13, 14, 15) which comprises an acoustic signal emitter (11) and/or a speed gauge (25) for measuring a speed of the quadruped.

8. Device for limiting movement in quadrupeds according to claim 7, **characterized in that**, independently of an inflation of a balloon, a warning signal is able to be generated by means of the acoustic signal emitter (11).

9. Device for limiting movement in quadrupeds according to claim 7 or 8, **characterized in that** the control unit (10) is designed in such a way that an inflation of the at least one balloon (12, 13, 14, 15) takes place automatically when the speed gauge (25) detects a predetermined minimal speed of the quadruped.

10. Device for limiting movement in quadrupeds according to one of the preceding claims 7 to 9, **characterized in that** the gas cartridge (8) and/or the acoustic signal emitter (11) are able to be activated in a remote-controlled way.

11. Device for limiting movement in quadrupeds according to one of the preceding claims, **characterized in that** the at least one balloon (12, 13, 14, 15) is accommodated in a cover (16) with a closure device (20; 22), which opens automatically with an inflation of the balloon and is closable again.

12. Device for limiting movement in quadrupeds according to one of the preceding claims, **characterized in that** the gas cartridge (8) is connected to the at least one balloon (12, 13, 14, 15) in a replaceable way.

13. Device for limiting movement in quadrupeds according to one of the preceding claims, **characterized in that** the gas cartridge (8) is disposed in a receiving chamber (29) which abuts at least one balloon (12, 13, 14, 15), whereby a border wall (34) between receiving chamber (29) and balloon (12) has a perforation (33).

## Revendications

1. Dispositif pour limiter le mouvement de quadrupèdes possédant des pattes avant et des pattes arrière, en particulier des chiens, comprenant au moins un petit ballon gonflable (12, 13, 14, 15), une cartouche de gaz (8) reliée à au moins un ballon (12, 13, 14, 15) pour gonfler au moins un ballon (12, 13, 14, 15), et une ceinture (1) pour attacher au moins un ballon (12, 13, 14, 15) au quadrupède, **caractérisé en ce que**
la ceinture (1) est conçue de manière à ce qu'au moins un ballon (12, 13, 14, 15) est disposé du côté inférieur du quadrupède dans une zone de ballon, qui est prévue derrière les pattes avant (2) et devant les pattes arrière (3), et se projette moins partiellement vers une zone de fonctionnement lors d'un mouvement de marche des pattes avant et/ou arrière lorsqu'au moins un ballon (12, 13, 14, 15) se trouve dans un état gonflé.

2. Dispositif pour limiter le mouvement de quadrupèdes selon la revendication 1, **caractérisé en ce que** plusieurs ballons (12, 13, 14, 15) sont prévus les uns à côté des autres et forment ensemble un système multi-chambre (7).

3. Dispositif pour limiter le mouvement de quadrupèdes selon la revendication 1 ou 2, **caractérisé en ce qu'**au moins deux ballons (12, 13) sont connectés en séries à la cartouche de gaz de manière à ce qu'un gonflage successif des ballons (12, 13) ait lieu.

4. Dispositif pour limiter le mouvement de quadrupèdes selon l'une des revendications précédentes, **caractérisé en ce qu'**au moins deux ballons (12, 13) sont disposés l'un derrière l'autre dans une direction longitudinale du quadrupède et sont reliés l'un à l'autre.

5. Dispositif pour limiter le mouvement de quadrupèdes selon l'une des revendications précédentes, **caractérisé en ce qu'**au moins deux ballons (12, 14) sont disposés verticalement l'un au-dessus de l'autre et sont reliés l'un à l'autre.

6. Dispositif pour limiter le mouvement de quadrupèdes selon l'une des revendications précédentes, **caractérisé en ce qu'**une unité de contrôle (10) est prévue pour un déclenchement bi-étagé ou multi-étagé d'une décharge de gaz hors de la cartouche de gaz (8) pour un gonflage successif d'un ou plusieurs ballons (12, 13, 14, 15).

7. Dispositif pour limiter le mouvement de quadrupèdes selon l'une des revendications précédentes, **caractérisé en ce qu'**une unité de contrôle (10) est prévue pour déclencher une décharge de gaz hors de la cartouche de gaz (8) pour le gonflage d'au moins un ballon (12, 13, 14, 15) qui comprend un émetteur de signal acoustique (11) et/ou une jauge de vitesse (25) pour mesurer la vitesse du quadrupède.

8. Dispositif pour limiter le mouvement de quadrupèdes selon la revendication 7, **caractérisé en ce que**, indépendamment du gonflage d'un ballon, un signal d'avertissement peut être généré au moyen de l'émetteur de signal acoustique (11).

9. Dispositif pour limiter le mouvement de quadrupèdes selon la revendication 7 ou 8, **caractérisé en ce que** l'unité de contrôle (10) est conçue de telle sorte que le gonflage d'au moins un ballon (12, 13, 14, 15) a lieu automatiquement lorsque la jauge de vitesse (25) détecte une vitesse minimale prédéterminée du quadrupède.

10. Dispositif pour limiter le mouvement de quadrupèdes selon l'une des revendications précédentes 7 à 9, **caractérisé en ce que** la cartouche de gaz (8) et/ou l'émetteur de signal acoustique (11) peuvent être activés par télécommande.

11. Dispositif pour limiter le mouvement de quadrupèdes selon l'une des revendications précédentes, **caractérisé en ce qu'**au moins un ballon (12, 13, 14, 15) est placé dans un couvercle (16) pourvu d'un dispositif de fermeture (20 ; 22), qui s'ouvre automatiquement lors du gonflage du ballon et qui est refermable.

12. Dispositif pour limiter le mouvement de quadrupèdes selon l'une des revendications précédentes, **caractérisé en ce que** la cartouche de gaz (8) reliée à au moins un ballon (12, 13, 14, 15) est interchangeable.

13. Dispositif pour limiter le mouvement de quadrupèdes selon l'une des revendications précédentes, **caractérisé en ce que** la cartouche de gaz (8) est disposée dans une chambre de réception (29) qui jouxte au moins un ballon (12, 13, 14, 15), une paroi de délimitation (34) munie d'une perforation (33) étant prévue entre la chambre de réception (29) et le ballon (12).
